Europäisches Patentamt

European Patent Office

Office européen des brevets

(11) Veröffentlichungsnummer: **0 334 305**
**A2**

(12) # EUROPÄISCHE PATENTANMELDUNG

(21) Anmeldenummer: **89105071.8**

(22) Anmeldetag: **21.03.89**

(51) Int. Cl.4: **H04M 1/02**

(30) Priorität: **24.03.88 DE 8804027 U**

(43) Veröffentlichungstag der Anmeldung:
**27.09.89 Patentblatt 89/39**

(84) Benannte Vertragsstaaten:
**DE FR GB IT**

(71) Anmelder: **Siemens Aktiengesellschaft**
**Wittelsbacherplatz 2**
**D-8000 München 2(DE)**

(72) Erfinder: **Osterloh, Hans-Dieter**
**Zur Rampe 8**
**D-4292 Rhede(DE)**

(54) **Fernsprechgerät für Tisch- und Wandbetrieb.**

(57) Der Bereich der Ablagemulde (18) für den Handapparat (2) eines Fernsprechgerätes wird von der Haltenase (13) eines im Inneren des Fernsprechgerätes schwenkbar gelagerten separaten Formelementes (12) durchgriffen. Die Haltenase (13) greift in eine Ausnehmung (16) am Handapparat (2) ein.

Die Lagerung sowie die Gestaltung des Formelementes (2) sollen vereinfacht werden.

Dies geschieht dadurch, daß das Formelement (12) direkt mit der schwenkbar gehaltenen und unter dem Einfluß einer Feder stehenden Schaltleiste (10) für den Gabelumschalter verbunden ist.

## Fernsprechgerät für Tisch- und Wandbetrieb

Die vorliegende Erfindungbeinhaltet ein Fernsprechgerät für Tisch- und Wandbetrieb mit zumindest einer in einem Untersatzteil angeordneten Ablagemulde für den Handapparat, wobei der Bereich dieser Ablagemulde von einer Haltenase eines im Fernsprechgerät schwenkbar gelagerten Formelementes durchsetzt wird und wobei die Haltenase in eine Ausnehmung am Handapparat eingreift.

Ein derartiges Fernsprechgerät ist z. B. durch die DE-PS 29 20 286 bekannt. Hierbei ist im Inneren des Fernsprechgerätes ein winkelförmig gestaltetes Formelement schwenkbar gelagert. Das eine freie Ende des Formelementes steht unter der Einwirkung einer Druckfeder, während das andere freie Ende eine Haltenase aufweist, die einen Durchbruch in der Ablagemulde bei Verwendung des Fernsprechgerätes als Tischgerät bündig verschließt. Im Bereich des unter Federkraft stehenden Formelementenendes ist eine Öffnung in der Bodenwanne des Fernsprechgerätes vorgesehen, die den Durchtritt eines Schraubenkopfes gestattet. Bei Wandbetrieb des Fernsprechgerätes drückt der der Befestigung des Gerätes an der Wand dienende Schraubenkopf auf das unter Federkraft stehende Formelementenende, so daß das Formelement verschwenkt wird. Dabei tritt die Haltenase aus der Ablagemulde heraus und greift formschlüssig in die im Hörbereich des Handapparates befindliche Ausnehmung ein.

Diese Gestaltung und Lagerung des Formelementes innerhalb des Fernsprechgerätes erfordert relativ viel Platz, der in den heutigen kompakt bestückten Fernsprechgeräten nicht immer zur Verfügung steht.

Der Erfindung liegt daher die Aufgabe zugrunde, den Platzbe darf des Formelementes erheblich zu verringern. Diese Aufgabe wird dadurch gelöst, daß das Formelement mit der schwenkbar gehalterten und unter dem Einfluß einer Feder stehenden Schaltleiste für den Gabelumschalter verbunden ist.

Eine derartige Gestaltung des Formelementes hat den Vorteil, daß innerhalb des Fernsprechgerätes keine separate Lagerstelle geschaffen werden muß. Das Formelement kann dabei einstückig mit der Schaltleiste verbunden sein. Die Haltenase ist dabei zweckmäßig in ihrem Endbereich ballig ausgebildet, um das Abheben bzw. Aufsetzen des Handapparates auf das Untersatzteil zu erleichtern.

Die Erfindung soll im folgenden anhand eines Ausführungsbeispieles näher erläutert werden.

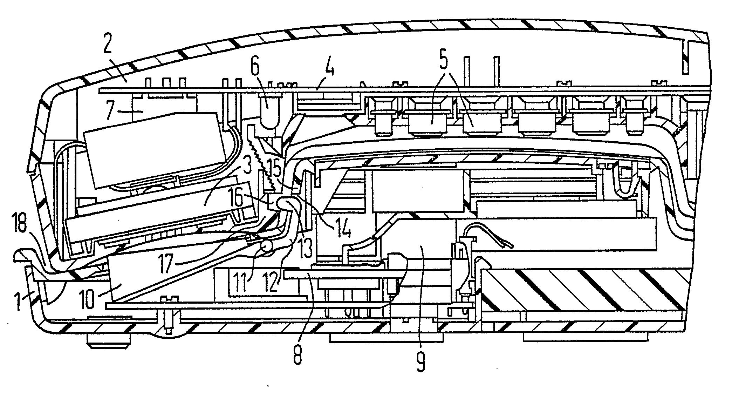

Die Abbildung zeigt einen Teil eines Fernsprechgerätes in einer geschnittenen Seitenansicht.

Das Fernsprechgerät besteht aus einem Untersatzteil 1 und einem darauf ablegbaren Handapparat 2. Im Handapparat 2 sind bei diesem Ausführungsbeispiel die Hörkapsel 3, Teile der auf einer Schaltungsplatte 4 angeordneten Tastatur 5 sowie verschiedene mit der Schaltungsplatte 4 verbundene elektrische und elektronische Bauteile 6 und 7 zu erkennen.

Im Untersatzteil ist unter anderem das Einstellorgan 8 für den Tonruf, die Steckaufnahme 9 für den Stecker der Anschlußschnur sowie die Schaltleiste 10 für den Gabelumschalter untergebracht. Die Schaltleiste 10 ist im Punkt 11 schwenkbar gelagert und mit einem Formelement 12 verbunden, das an seinem freien Ende eine Haltenase 13 aufweist. Diese Haltenase 13 durchgreift im aufgelegten Zustand des Handapparates 2 einen Durchbruch 14 in der Wandung 15 der Ablagemulde 18 im Untersatzteil 1. Das freie Ende der Haltenase 13 greift wiederum in eine Ausnehmung 16 im Gehäuse 17 des Hörbereiches des Handapparates ein und sichert somit den Handapparat 1 bei Verwendung des Fernsprechgerätes als Wandgerät in ein unerwünschtes Herabfallen. Beim Abheben des Handapparates 2 wird die Schaltleiste durch Federkraft verschwenkt und die Haltenase aus der Ausnehmung am Handapparat 2 herausgeschwenkt.

## Ansprüche

1. Fernsprechgerät für Tisch- und Wandbetrieb mit zumindest einer in einem Untersatzteil (1) angeordneten Ablagemulde (18) für den Handapparat (2), wobei der Bereich dieser Ablagemulde (18) von einer Haltenase (13) eines im Fernsprechgerät schwenkbar gelagerten Formelementes (12) durchsetzt wird und wobei die Haltenase (13) in eine Ausnehmung (16) am Handapparat (2) eingreift, **dadurch gekennzeichnet,** daß das Formelement (12) mit der schwenkbar gehalterten und unter dem Einfluß einer Feder stehenden Schaltleiste (10) für den Gabelumschalter verbunden ist.

2. Fernsprechgerät nach Anspruch 1, **dadurch gekennzeichnet,** daß die Haltenase (13) in ihrem Endbereich ballig gestaltet ist.